# EUROPEAN PATENT SPECIFICATION

(11) **EP 2 470 380 B1**
(45) Date of publication and mention of the grant of the patent: **30.04.2014**
(21) Application number: 10752948.9
(22) Date of filing: 02.08.2010
(51) Int. Cl.: B60C 23/00

(54) **PNEUMATIC VALVE**
DRUCKLUFTVENTIL
VANNE PNEUMATIQUE

(30) Priority: 24.08.2009 US 236337 P
(43) Date of publication of application: 04.07.2012
(73) Proprietor: Norgren GT Development Corporation, Auburn, WA 98001 (US)
(72) Inventor: MORRIS, John, Michael, Auburn Washington 98001 (US); CURTIN, Kevin, Vincent, Seattle Washington 98136 (US); SEALY, Mark, Edward, Byers, Bidford on Avon Warwickshire B50 4HQ (GB)
(74) Representative: Hartwell, Ian Peter
(86) International application number: PCT/US2010/044104
(87) International publication number: WO 2011/028346

(56) References cited:
- DE-A1- 3 246 601
- GB-A- 2 414 782
- US-A- 4 771 985

## Description

### BACKGROUND OF THE INVENTION

### 1. FIELD OF THE INVENTION

The invention is related to the field of valves, and more particularly, to a pneumatic valve.

### 2. DESCRIPTION OF THE PRIOR ART

Vehicles can include an onboard tire inflation system that can be used to keep vehicle tires at a desired inflation level. Driving conditions may dictate changing tire inflation pressures, such as due to wet or dry driving conditions or rough or smooth roadways. A tire inflation system usually includes a pneumatic air source, a control system, conduits, and valves at each vehicle wheel.

It is desirable that a valve at a vehicle wheel be simple and durable. It is desirable that a valve at a vehicle wheel be remotely controlled. It is desirable that a valve at a vehicle wheel be pneumatically controlled.

DE 3,246,601 to Stumpe discloses a tire pressure control system that includes a pressure regulator valve 7, a pilot valve 8, a front axle supply valve 15', a rear axle supply valve 15", and four individual wheel valves 20-23. A driver can change the tire pressure by pressing a pressure-setting switch button S1. The switch S1 actuates the pilot valve 8 and a resulting pressure pulse actuates the wheel valves 20-23. A wheel valve 20' includes a diaphragm 53 that can flex upward into contact with a valve seat 59 (*i.e*., closed) or can flex downward away from the valve seat 59 (*i.e*., open). A piston 64 can move upward in response to pressure and after a predetermined delay can block an outlet opening 65 to a corresponding tire. The pneumatic air can travel through a line 69 and a check valve 43'b to hold the diaphragm 53 in the closed position against the valve seat 59.

A manually actuated latch barrel valve is known from document US 4 771 985.

### ASPECTS OF THE INVENTION

According to the invention, a pneumatic valve comprises:
a first port and a second port;
a valve mechanism in fluidic communication with the first port and the second port, with the valve mechanism being configured to receive a pneumatic control signal via the first port and advance to a next valve actuation state of a plurality of predetermined valve actuation states upon receipt of the pneumatic control signal, with the plurality of predetermined valve actuation states providing a plurality of predetermined flow profiles between the first port and the second port.

Preferably, the pneumatic valve is remotely controlled via the first port. The valve mechanism latches at the next valve state.

Preferably, a flow profile of the plurality of predetermined flow profiles includes a predetermined flow rate between the first port and the second port.

Preferably, a flow profile of the plurality of predetermined flow profiles includes a predetermined flow direction between the first port and the second port. The valve mechanism cycles among the plurality of predetermined valve actuation states and where the plurality of predetermined valve actuation states comprises a predetermined valve actuation sequence.

Preferably, the valve mechanism will not advance to the next valve actuation state unless the pneumatic control signal exceeds a predetermined actuating threshold.

Preferably, the valve mechanism comprises a poppet configured to be moved in an actuating direction by the pneumatic control signal, a piston in fluidic communication with the first port and the second port, with the piston being configured to be moved in the actuating direction in response to movement of the poppet in the actuating direction, and a latch barrel configured to be advanced to a next latch actuation state of the plurality of predetermined latch actuation states by the movement of the piston in the actuating direction or in the non-actuating direction.

In some aspects of the invention, a pneumatic valve comprises:
a chamber;
a first port and a second port in fluidic communication with the chamber;
a poppet configured to be moved in an actuating direction in the chamber by a pneumatic control signal received via the first port;
a piston in fluidic communication with the first port and the second port, with the piston being configured to be moved in the actuating direction in the chamber in response to movement of the poppet in the actuating direction; and
a latch barrel configured to advance to a next latch actuation state of a plurality of predetermined latch actuation states in response to movement of the piston in the actuating direction or in a non-actuating direction, with the plurality of predetermined latch actuation states providing a plurality of predetermined flow profiles between the first port and the second port.

Preferably, the pneumatic valve is remotely controlled via the first port.

Preferably, the latch barrel latches at the next valve state.

Preferably, a flow profile of the plurality of predetermined flow profiles includes a predetermined flow rate between the first port and the second port.

Preferably, a flow profile of the plurality of predetermined flow profiles includes a predetermined flow direction between the first port and the second port.

Preferably, a flow profile of the plurality of predetermined flow profiles includes a predetermined poppet opening distance.

Preferably, a flow profile of the plurality of predetermined flow profiles includes a predetermined poppet opening distance and a predetermined pressure differential between the first port and the second port.

Preferably, the latch barrel cycles among the plurality of predetermined valve actuation states and where the plurality of predetermined valve actuation states comprises a predetermined valve actuation sequence.

Preferably, the poppet will not move in the actuating direction until receipt of a pneumatic control signal that exceeds a predetermined actuating threshold.

Preferably, the poppet and the piston will not move in the actuating direction and the latch barrel will not advance to the next latch actuation state unless the pneumatic control signal exceeds a predetermined actuating threshold.

Preferably, the poppet is maintained at a current poppet opening distance of a current valve state.

Preferably, a piston actuation force is increased after the poppet has begun to move in the actuating direction and breaks sealing contact with the first port.

The invention also covers a pneumatic valve actuation method for a pneumatic valve including a first port and a second port, the method comprises:
receiving a pneumatic control signal via the first port; and
advancing to a next valve actuation state of a plurality of predetermined valve actuation states upon receipt of the pneumatic control signal, with the plurality of predetermined valve actuation states providing a plurality of predetermined flow profiles between the first port and the second port.

Preferably, the pneumatic valve is remotely controlled via the first port.

The pneumatic valve latches at the next valve state.

Preferably, a flow profile of the plurality of predetermined flow profiles includes a predetermined flow rate between the first port and the second port.

Preferably, a flow profile of the plurality of predetermined flow profiles includes a predetermined flow direction between the first port and the second port.

The pneumatic valve cycles among the plurality of predetermined valve states and with the plurality of predetermined valve states comprising a predetermined valve actuation sequence.

Preferably, the pneumatic valve will not advance to the next valve actuation state unless the pneumatic control signal exceeds a predetermined actuating threshold.

Preferably, the pneumatic valve includes a poppet configured to be moved in an actuating direction by a pneumatic control signal received via the first port, a piston configured to be moved in the actuating direction in response to movement of the poppet in the actuating direction, and a latch barrel configured to advance to a next latch actuation state of a plurality of predetermined latch actuation states in response to movement of the piston in the actuating direction or in a non-actuating direction.

Preferably, the pneumatic valve includes a poppet, a piston actuated by the poppet, and a latch barrel actuated by the piston, wherein the poppet is maintained at a current poppet opening distance of a current valve state.

Preferably, the pneumatic valve includes a poppet, a piston actuated by the poppet, and a latch barrel actuated by the piston, wherein a piston actuation is enhanced after the poppet has begun to move in an actuating direction and breaks sealing contact with the first port.

### BRIEF DESCRIPTION OF THE DRAWINGS

The same reference number represents the same element on all drawings. It should be understood that the drawings are not necessarily to scale.
FIG. 1 shows a pneumatic valve according to the invention.
FIG. 2 is an exploded view that shows detail of the pneumatic valve according to the invention.
FIG. 3 is a cross-sectional view of the pneumatic valve when the valve mechanism is at a closed valve actuation state.
FIG. 4 is a cross-sectional view of the pneumatic valve when the valve mechanism is at a fully open valve actuation state.
FIG. 5 is a cross-sectional view of the pneumatic valve when the valve mechanism is at a partially open valve actuation state.

### DETAILED DESCRIPTION OF THE INVENTION

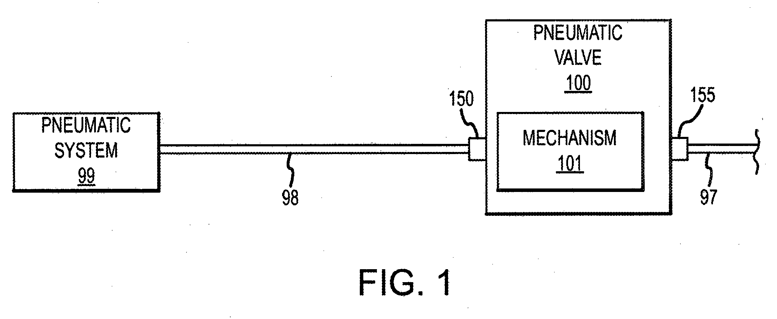

FIGS. 1-5 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

FIG. 1 shows a pneumatic valve 100 according to the invention. The pneumatic valve 100 in some embodiments is connected to a pneumatic system 99 by a supply conduit 98. The pneumatic valve 100 controls pneumatic air transfer between the supply conduit 98 and an output conduit 97. The pneumatic system 99 can selectively provide pneumatic control signals to the pneumatic valve 100 and can selectively provide a supply pressure of pneumatic air. As a result, the pneumatic valve 100, under the control of the pneumatic system 99, can block air transfer between the supply conduit 98 and the output conduit 97. The pneumatic valve 100, under the control of the pneumatic system 99, can allow a forward air transfer from the supply conduit 98 to the output conduit 97. The pneumatic valve 100, under the control of the pneumatic system 99, can allow a backward air transfer from the output conduit 97 to the supply conduit 98.

The discussion herein centers on a valve for pneumatic air. However, it should be understood that the pneumatic valve 100 can further be used for any manner of fluid, including gases and liquids and fluids of various compositions.

The pneumatic valve 100 receives pneumatic control signals from the pneumatic system 99. The pneumatic valve 100 is remotely controlled via the first port 150.

The pneumatic valve 100 in some embodiments is a two-port valve. The pneumatic valve 100 includes a first port 150 and a second port 155. The pneumatic valve 100 further includes a valve mechanism 101 in fluidic communication with the first port 150 and the second port 155. The valve mechanism 101 is configured to receive a pneumatic control signal via the first port 150 and advance to a next valve actuation state of a plurality of predetermined valve actuation states upon receipt of the pneumatic control signal. In some embodiments, the valve mechanism 101 latches at the next valve actuation state. Alternatively, in other embodiments the valve mechanism 101 can be held at the next valve actuation state by the pneumatic control signal.

Alternatively, in other embodiments the pneumatic valve 100 can comprise a three-port valve. For example, the pneumatic valve 100 can include a first port 150 that is a control port and a third port 156 that comprises a supply port used for supplying pneumatic air to or venting pneumatic air from the pneumatic valve 100.

The plurality of predetermined valve actuation states provide a plurality of predetermined flow profiles. A flow profile of the plurality of predetermined flow profiles includes a predetermined flow rate between the first port 150 and the second port 155. A flow profile of the plurality of predetermined flow profiles includes a predetermined flow direction between the first port 150 and the second port 155.

The valve mechanism 101 cycles among the plurality of predetermined valve actuation states. In some embodiments, the valve mechanism 101 advances to the next valve actuation state when the pneumatic control signal exceeds a predetermined actuating threshold. The pneumatic control signal therefore can comprise one control signal or a sequence of two or more control signals, wherein the valve mechanism can be advanced to either a next state or an actuation state that is multiple states from the current valve actuation state. Consequently, the plurality of predetermined valve actuation states comprises a predetermined valve actuation sequence.

In some embodiments, the pneumatic system 99 comprises a portion of a vehicular pneumatic system and the output conduit 97 is coupled to one or more tires. The pneumatic valve 100 can consequently be coupled to a single tire or multiple tires, such as a dual wheel arrangement, for example. The pneumatic valve 100 can therefore comprise a component of a tire inflation system. The tire inflation system can maintain the inflation pressure of one or more vehicle tires. The tire inflation system can regulate the inflation pressure of one or more vehicle tires. The tire inflation system can provide air to (*i.e*., inflate) or remove air from (*i.e*., deflate) one or more vehicle tires.

The pneumatic valve 100 does not require a pneumatic input port for receiving a pressurized pneumatic air supply and a separate pneumatic control for actuating the pneumatic valve 100. The first port 150 both receives air to be transferred to the second port 155 (*i.e*., port 150 operates as an input) and receives pneumatic control signals that actuate the valve mechanism of the pneumatic valve 100 (*i.e*., port 150 operates as a control). Further, the first port 150 also can output air back to the pneumatic system 99, which can vent or exhaust the air or can accumulate the backward transfer air (*i.e*., port 150 operates as an output).

A pneumatic control signal enables air flow through the pneumatic valve 100 according to a pressure differential between the first port 150 and the second port 155, and the valve actuation state. The predetermined supply pressure can be less than, equal to, or greater than an actuation pressure required to move the piston 120. The predetermined supply pressure can be less than, equal to, or greater than an output pressure at the second port 155. However, actuation of the valve mechanism 101 will depend not only on the predetermined supply pressure, but also on the current valve actuation state. Further, depending on the valve actuation state, a change in the supply pressure at the first port 150 may or may not result in a change in the valve actuation state, depending on the design of the valve mechanism 101.

If the pressure at the first port 150 comprises a pneumatic control signal that is held or increased, it should be noted that the valve mechanism 101 may not actuate. Actuation of the valve mechanism 101 in some embodiments may require a drop of the pressure below the predetermined actuating threshold, followed by a pneumatic control signal, before another valve actuation can occur.

If the supply pressure is greater than the output pressure, a forward transfer of air from the first port 150 to the second port 155 will occur, such as a tire inflation operation, for example. This assumes that the valve mechanism 101 is in an open state. The rate and duration of the forward transfer will depend on a valve opening amount and a pressure differential.

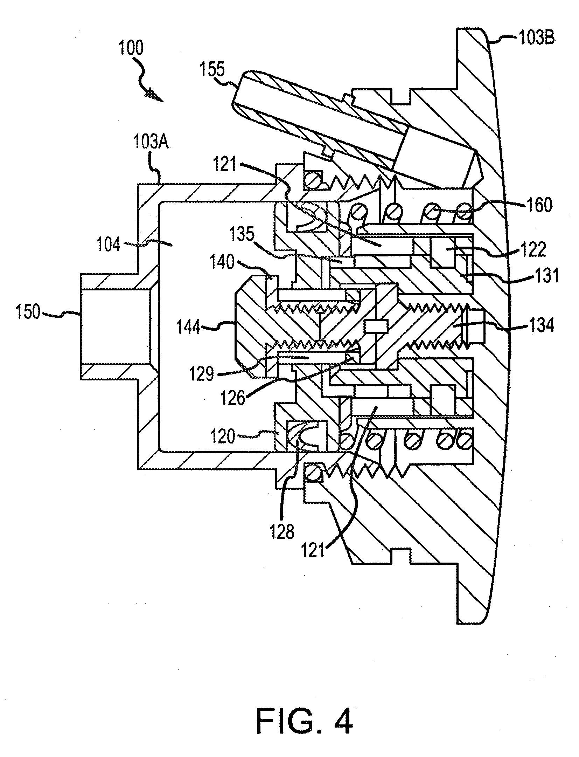

During a forward transfer of pneumatic air from the first port 150 to the second port 155, the supply pressure and the output pressure may become equalized over time. Equalization may also occur during a backwards air transfer. Advantageously, a change in pressure differential will not affect the valve actuation state if it is in a latched state. In some embodiments, a pneumatic control signal advances and changes the valve actuation state. If the valve actuation state is not currently latched, then a change (or equalization) in the pressure differential may allow the valve actuation state to change, such as the piston 120 transition depicted in FIG. 4 to FIG. 5.

If the supply pressure is less than the output pressure, a backwards transfer from the second port 155 to the first port 150 will occur, such as a tire deflation operation, for example. This assumes that the valve mechanism 101 is in an open state.

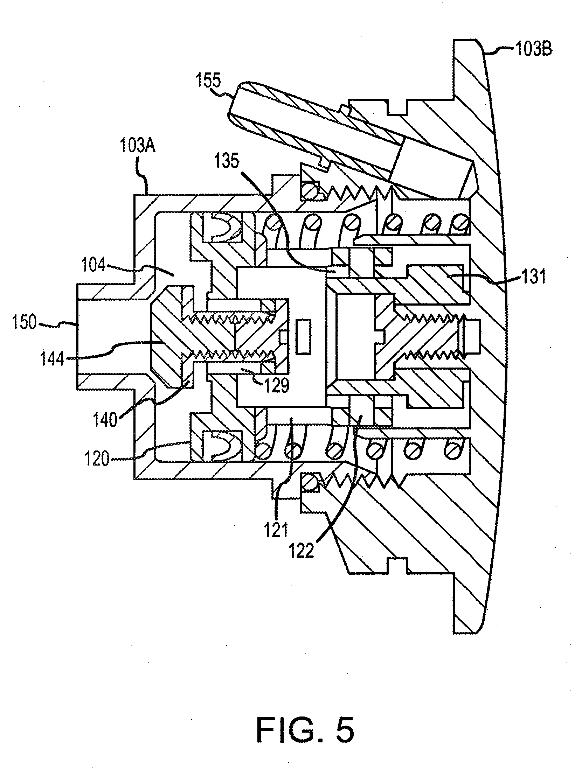

Advantageously, the supply pressure can be at any desired level during a deflation operation. In the prior art, a two-port tire inflation system valve required a supply pressure to open the valve for deflation, limiting a deflation operation to the minimum opening pressure required at the supply side. In contrast, the pneumatic valve 100 according to the invention can maintain a backwards transfer (such as a deflation, for example) until the output pressure is zero (where the valve latches in an open state, such as in FIG. 5). In some embodiments, the valve mechanism of the pneumatic valve 100 does not require any minimum supply pressure for a transfer of air, where the valve mechanism latches in a deflate actuation state. In a latched state, the valve mechanism 101 will maintain the deflate actuation state at any supply pressure that is at or below the output pressure, including a zero or even negative supply pressure. Consequently, the backwards transfer may not be limited.

Advantageously, the pneumatic valve 100 in some embodiments does not require an exhaust port for venting backwards transfer air to the environment. Some prior art tire inflation systems comprise three-port valves that directly exhaust air to the environment. However, in a vehicular application, a three-port valve mounted to a vehicle wheel that includes an exhaust opening provides an avenue for dirt, moisture, and other foreign material to get inside the valve. This can lead to valve damage and failure and improper operation. In some embodiments, the pneumatic valve 100 can include a supply line that provides pneumatic air to or removes air from the valve 100.

The valve actuation state is advanced according to a predetermined valve state sequence. The pneumatic valve 100 can be designed with an appropriate predetermined valve state sequence that is appropriate for a particular valve application. As a result, the pneumatic valve 100 can be designed for a wide variety of applications, including vehicular applications, industrial applications, and control applications, for example.

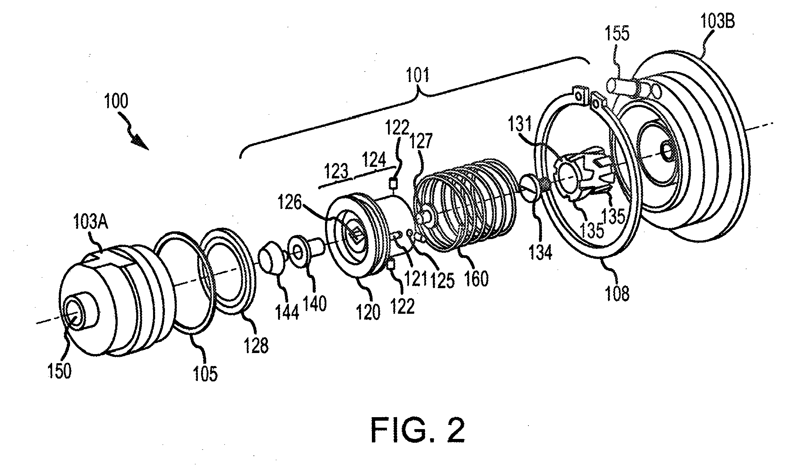

FIG. 2 is an exploded view that shows detail of the pneumatic valve 100 according to the invention. The pneumatic valve 100 in some embodiments includes a first body portion 103A designed to fit to a second body portion 103B. The first body portion 103A in the embodiment shown includes the first port 150 and the second body portion 103B includes the second port 155. However, this is just one arrangement and other body and port arrangements are contemplated. The first body portion 103A and the second body portion 103B may be substantially sealed together by a body seal 105, such as an o-ring, as shown. The pneumatic valve 100 in some embodiments can include a retainer 108 that affixes the pneumatic valve 100 to another structure.

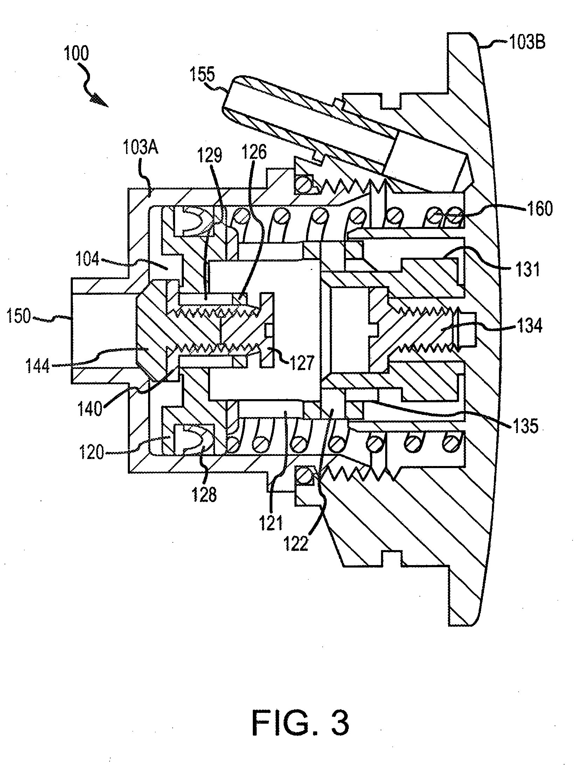

The first body portion 103A and the second body portion 103B form a chamber 104 (see FIG. 3). The valve mechanism 101 is located within the chamber 104. The valve mechanism 101 comprises a poppet 140, a piston 120, a biasing device 160, and a latch barrel 131.

The poppet 140 is assembled to a poppet sleeve 126 of the piston 120. The poppet sleeve 126 includes one or more sleeve ports 129 (see FIG. 4) that allow air to travel around the poppet 140 and through the piston 120. The poppet 140 includes a poppet seal 144 that moves relative to and therefore blocks and unblocks the first port 150. The poppet 140 is held to the piston 120 by a poppet retainer 127, wherein the poppet 140 may move axially, in a limited movement range, within the poppet sleeve 126 of the piston 120 (see FIGS. 3-5).

The piston 120 further includes a piston head 123 and a piston flange 124 (see FIG. 2). A piston seal 128 fits to the piston head 123 and seals the piston 120 within the chamber 104. The piston flange 124 includes one or more piston ports 121 that enable air to pass into the piston 120, to the shaft of the poppet 140. The piston flange 124 further includes one or more pin apertures 125 that receive one or more corresponding latch pins 122. The latch pins 122 may be held in the pin apertures 125 in some manner or may move freely in the pin apertures 125 when assembled into the piston 120. The latch pins 122 will engage with latch projections 135 of the latch barrel 131. However, in other embodiments, the latch pins 122 can be replaced by inward projections formed as part of the piston flange 124. Further, the latch pins 122 or the flange projections do not have to be cylindrical in shape. Other shapes and configurations are contemplated and are within the scope of the description and claims.

The biasing device 160 extends between the piston head 123, fitting over the piston flange 124, and contacting the second body portion 103B. The biasing device 160 therefore provides a biasing force that operates to keep the piston 120 in a leftward position in the drawing, wherein the poppet 140 is held in a closed position with respect to the first port 150.

The latch barrel 131 includes a predetermined number of latch projections 135. The latch projections 135 comprise predetermined shapes that interact with the latch pins 122 in order to cycle between a plurality of predetermined valve actuation states. The latch projections 135 operate to first rotate the latch barrel 131 in response to movement of the piston 120 (and the latch pins 122) in an actuating direction. The actuating direction is to the right in the figure. The latch projections 135 also operate to limit the return travel of the piston 120, wherein the latch projections 135 can stop the return motion of the piston 120 at predetermined locations or can allow the piston 120 to fully return. As a consequence, the latch projections 135 can determine an opening amount by positioning the poppet seal 144 at any predetermined distance from the first port 150.

The latch projections 135 can be designed to achieve a predetermined number of latch states and therefore a predetermined number of valve actuation states. The latch projections 135 can be designed to achieve a plurality of poppet opening distances, with the plurality of poppet opening distances achieving a plurality of predetermined flow rates.

The latch barrel 131 interacts with the latch pins 122 to translate the substantially linear motion of the actuation of the piston 120 into a substantially rotational motion of the latch barrel 131. The amount of rotation will depend on the number of latch pins 122 and the number and design of the latch projections 135.

The barrel retainer 134 in the embodiment shown holds the latch barrel 131 to the second body portion 103B. However, the barrel retainer 134 does not prevent the latch barrel 131 from rotating with respect to the second body portion 103B.

FIG. 3 is a cross-sectional view of the pneumatic valve 100 when the valve mechanism 101 is at a closed valve actuation state. The poppet seal 144 is therefore in contact with and blocks the first port 150. The poppet seal 144 and the poppet 140 are held in this position by the piston 120. The piston 120 is in turn held in the non-actuated direction by the biasing device 160. Consequently, no air (or fluid) can travel between the first port 150 and the second port 155 in either direction.

It should be understood that in this position of the valve mechanism 101, there may or may not be a pneumatic pressure at the first port 150. In a tire inflation system, for example, it may be advantageous to not supply a pressure at the first port 150 during normal conditions, i.e., when not either inflating or deflating an associated tire or tires.

In this position, a pneumatic control signal will need to overcome the full biasing force provided by the biasing device 160 in order to move the poppet 140 and the piston 120. As a result, the poppet 140 will not move until a pneumatic control signal is received at the first port 150. The pneumatic control signal may be required to exceed a predetermined actuating threshold. The predetermined actuating threshold in some embodiments includes a predetermined pressure. The predetermined actuating threshold in some embodiments can require a predetermined pressure held for a predetermined time sufficient to move the piston 120 fully in the actuating direction.

Movement fully in the actuating direction will result in the latch pins 122 of the piston 120 engaging the latch projections 135 of the latch barrel 131. Engagement of the latch pins 122 with the latch projections 135 will cause the latch barrel 131 to rotate and will advance the latch barrel 131 to the next valve actuation state (with respect to the piston 120).

The poppet 140 is smaller than the piston 120 in face area. Therefore, a pneumatic control signal acting on the poppet face will provide a smaller actuating force than the pneumatic control signal acting on the piston face. As a consequence, after a pneumatic control signal starts to move the piston 120, a piston actuation force is increased after the poppet 140 has begun to move in the actuating direction and breaks sealing contact with the first port 150. This is due to the control pressure acting on the greater area of the piston face.

FIG. 4 is a cross-sectional view of the pneumatic valve 100 when the valve mechanism 101 is at a fully open valve actuation state. The fully open valve actuation state can correspond to a tire inflation operation in some embodiments. The poppet 140 in this valve actuation state will be at a maximum poppet opening distance. Air will travel through the sleeve ports 129 and the piston ports 121, flowing around the latch projections 135. Air will not flow around the perimeter of the piston 120. As a consequence, air (or other fluid) can flow between the first port 150 and the second port 155. The amount of flow and the direction of flow will depend on a pressure differential between the first port 150 and the second port 155.

Where the piston 120 and poppet 140 in some embodiments are latched at the valve actuation state, the pressure at the two ports can vary and the valve state will not change, although the flow direction will subsequently change, however.

In some embodiments, the piston 120 will not latch and the piston 120 will stay in the rightward position only if the supply pressure exceeds the output pressure. Consequently, the piston 120 will be at an inflate state, but will not maintain the inflate state if the supply pressure drops too much. Alternatively, in other embodiments the latch barrel 131 can latch and hold the piston 120 and the poppet 140 in the shown fully-actuated position.

FIG. 5 is a cross-sectional view of the pneumatic valve 100 when the valve mechanism 101 is at a partially open valve actuation state. The partially open valve actuation state can correspond to a tire deflation operation in some embodiments. In some embodiments, the piston 120 moves from the position in FIG. 4 to this state if the supply pressure is not greater than the output pressure.

As previously noted, the poppet 140 and poppet seal 144 are held in this position by the latch barrel 131. As a result, a drop in pressure at the first port 150 (or a complete lack of pressure) will not change the valve actuation state. Consequently, a deflate operation (or any backwards flow state) will continue until a pneumatic control signal advances the latch barrel 131 to a next valve actuation state.

It should be understood that the valve actuation sequence shown in FIGS. 3-5 is only one possible sequence. The invention is defined by the scope of the claims. For example, in a vehicle tire inflation system, the valve sequence may comprise a hold, inflate, deflate, and inflate sequence. After the fourth sequence, the valve actuation state cycles back to the hold state. It is therefore possible to fully control the inflation of a vehicle tire or tires. In some embodiments, the latch barrel 131 will turn one-eighth turn at every piston actuation and control signal change. However, it should be understood that the number of actuation cycles in one complete rotation of the latch barrel 131 will depend on the design. In addition, the rotational direction will also depend on the design.

The various embodiments of the invention can be implemented to provide several advantages, if desired. The valve 100 is pneumatically actuated. The valve 100 has only one pneumatic input and only two ports total. The valve 100 employs only a single valve mechanism and single poppet. Air or other fluids can be transferred in either direction using pneumatic signals on a single port. The valve 100 can be remotely actuated.

The valve 100 latches mechanically in a state as selected by the first port 150. The valve 100 has multiple valve states. The valve states are cyclic. A pneumatic control pulse of a predetermined pressure and duration is required in order to cycle between valve states.

The exhaust is through the first port 150 if the supply pressure at the first port 150 is less than the output pressure at the second port 155 in the deflate state. Because the valve 100 exhausts air through the first port 150 and does not include a separate exhaust valve, a tire cannot be simultaneously inflated and deflated, such as where an exhaust valve is stuck or faulty. The valve 100 can fully deflate a tire or other pneumatic device coupled to the second port 155, as the valve mechanism may maintain a valve deflate state in some embodiments. A tire pressure will be substantially maintained in the event of failure of the control system or of any components coupling a pneumatic supply to the valve in the hold state (see FIG. 3). The valve 100 is not subject to accidental deflation, as deflation requires both the proper deflate valve actuation state and a negative pressure differential.

## Claims

1. A pneumatic valve (100), the pneumatic valve (100) including a first port (150) and a second port (155), with the pneumatic valve (100) being **characterized by**:
a valve mechanism (101) in fluidic communication with the first port (150) and the second port (155), with the valve mechanism (101) being configured to receive a pneumatic control signal via the first port (150) and advance to and latch at a next sequential valve actuation state of a plurality of predetermined sequential valve actuation states upon receipt of the pneumatic control signal, with the plurality of predetermined sequential valve actuation states providing a plurality of predetermined flow profiles between the first port (150) and the second port (155), wherein the valve mechanism (101) cycles sequentially among the plurality of predetermined sequential valve actuation states and where the plurality of predetermined sequential valve actuation states comprise a predetermined valve actuation sequence.

2. The pneumatic valve (100) of claim 1, wherein the pneumatic valve (100) is configured to be remotely controlled via the first port (150).

3. The pneumatic valve (100) of claim 1, with a flow profile of the plurality of predetermined flow profiles including one or more of a predetermined flow rate and a predetermined flow direction between the first port (150) and the second port (155).

4. The pneumatic valve (100) of claim 1, wherein the valve mechanism (101) will not advance to the next sequential valve actuation state unless the pneumatic control signal exceeds a predetermined actuating threshold.

5. The pneumatic valve (100) of claim 1, with the valve mechanism (101) comprising:
a poppet (140) configured to be moved in an actuating direction by the pneumatic control signal;
a piston (120) in fluidic communication with the first port (150) and the second port (155), with the piston (120) being configured to be moved in the actuating direction in response to movement of the poppet (140) in the actuating direction; and
a latch barrel (131) configured to be advanced to the next sequential valve actuation state of the plurality of predetermined sequential valve actuation states by the movement of the piston (120) in the actuating direction or in a non-actuating direction.

6. The pneumatic valve (100) of claim 5, with a flow profile of the plurality of predetermined flow profiles including a predetermined poppet opening distance.

7. The pneumatic valve (100) of claim 5, with a flow profile of the plurality of predetermined flow profiles including a predetermined poppet opening distance and a predetermined pressure differential between the first port (150) and the second port (155).

8. The pneumatic valve (100) of claim 5, wherein the latch barrel (131) cycles among the plurality of predetermined sequential valve actuation states and where the plurality of predetermined sequential valve actuation states comprises the predetermined valve actuation sequence.

9. The pneumatic valve (100) of claim 5, wherein the poppet (140) will not move in the actuating direction until receipt of a pneumatic control signal that exceeds a predetermined actuating threshold.

10. The pneumatic valve (100) of claim 5, wherein the poppet (140) and the piston (120) will not move in the actuating direction and the latch barrel (131) will not advance to the next sequential valve actuation state unless the pneumatic control signal exceeds a predetermined actuating threshold.

11. The pneumatic valve (100) of claim 5, wherein the poppet (140) is maintained at a current poppet opening distance of a current valve state.

12. The pneumatic valve (100) of claim 5, where a piston actuation force is increased after the poppet (140) has begun to move in the actuating direction and breaks sealing contact with the first port (150).

13. A pneumatic valve actuation method, with the pneumatic valve (100) including a first port (150) and a second port (155), with the method being **characterized by**:
receiving a pneumatic control signal via the first port (130); and
advancing a valve mechanism (101) to and latching at a next sequential valve actuation state of a plurality of predetermined sequential valve actuation states upon receipt of the pneumatic control signal, with the plurality of predetermined sequential valve actuation states providing a plurality of predetermined flow profiles between the first port (150) and the second port (155), wherein the valve mechanism (101) cycles sequentially among the plurality of predetermined sequential valve actuation states and where the plurality of predetermined sequential valve actuation states comprise a predetermined valve actuation sequence.

14. The method of claim 13, with a flow profile of the plurality of predetermined flow profiles including one or more of a predetermined flow rate and a predetermined flow direction between the first port (150) and the second port (155).

15. The method of claim 13, wherein the pneumatic valve (100) will not advance to the next sequential valve actuation state unless the pneumatic control signal exceeds a predetermined actuating threshold.

## Patentansprüche

1. Druckluftventil (100), wobei das Druckluftventil (100) eine erste Öffnung (150) und eine zweite Öffnung (155) aufweist, wobei das Druckluftventil (100) **gekennzeichnet ist durch**:
einen Ventilmechanismus (101) in Fluidverbindung mit der ersten Öffnung (150) und der zweiten Öffnung (155), wobei der Ventilmechanismus (101) zum Empfangen eines pneumatischen Steuersignals über die erste Öffnung (150) und zum Vorwärtsbewegen und Rasten in einen/m nächsten sequentiellen Ventilbetätigungszustand aus mehreren vorbestimmten sequentiellen Ventilbetätigungszuständen nach dem Empfang des pneumatischen Steuersignals konfiguriert ist, wobei die mehreren vorbestimmten sequentiellen Ventilbetätigungszustände mehrere vorbestimmte Strömungsprofile zwischen der ersten Öffnung (150) und der zweiten Öffnung (155) aufweisen, wobei der Ventilmechanismus (101) sequentiell zwischen den mehreren vorbestimmten sequentiellen Ventilbetätigungszuständen zykliert und wobei die mehreren vorbestimmten sequentiellen Ventilbetätigungszustände eine vorbestimmte Ventilbetätigungsfolge umfassen.

2. Druckluftventil (100) nach Anspruch 1, wobei das Druckluftventil (100) so konfiguriert ist, dass es über die erste Öffnung (150) ferngesteuert wird.

3. Druckluftventil (100) nach Anspruch 1, wobei ein Strömungsprofil der mehreren vorbestimmten Strömungsprofile eine vorbestimmte Strömungsrate und/oder eine vorbestimmte Strömungsrichtung zwischen der ersten Öffnung (150) und der zweiten Öffnung (155) aufweist.

4. Druckluftventil (100) nach Anspruch 1, wobei der Ventilmechanismus (101) erst dann in den nächsten sequentiellen Ventilbetätigungszustand geht, wenn das pneumatische Steuersignal eine vorbestimmte Betätigungsschwelle übersteigt.

5. Druckluftventil (100) nach Anspruch 1, wobei der Ventilmechanismus (101) Folgendes umfasst:
einen Ventilkegel (140), der für eine Bewegung in einer Betätigungsrichtung durch das pneumatische Steuersignal konfiguriert ist;
einen Kolben (120) in Fluidverbindung mit der ersten Öffnung (150) und der zweiten Öffnung (155), wobei der Kolben (120) zum Bewegen in der Betätigungsrichtung als Reaktion auf eine Bewegung des Ventilkegels (140) in der Betätigungsrichtung konfiguriert ist; und
eine Rasthülse (131), die zum Vorbewegen in den nächsten sequentiellen Ventilbetätigungszustand der mehreren vorbestimmten sequentiellen Ventilbetätigungszustände durch die Bewegung des Kolbens (120) in der Betätigungsrichtung oder in der Nichtbetätigungsrichtung konfiguriert ist.

6. Druckluftventil (100) nach Anspruch 5, wobei ein Strömungsprofil der mehreren vorbestimmten Strömungsprofile eine vorbestimmte Ventilkegelöffnungsdistanz aufweist.

7. Druckluftventil (100) nach Anspruch 5, wobei ein Strömungsprofil der mehreren vorbestimmten Strömungsprofile eine vorbestimmte Ventilkegelöffnungsdistanz und ein vorbestimmtes Druckdifferential zwischen der ersten Öffnung (150) und der zweiten Öffnung (155) aufweist.

8. Druckluftventil (100) nach Anspruch 5, wobei die Rasthülse (131) unter den mehreren vorbestimmten sequentiellen Ventilbetätigungszuständen zykliert und wobei die mehreren vorbestimmten sequentiellen Ventilbetätigungszustände die vorbestimmte Ventilbetätigungsfolge umfassen.

9. Druckluftventil (100) nach Anspruch 5, wobei sich der Ventilkegel (140) erst dann in der Betätigungsrichtung bewegt, wenn er ein pneumatisches Steuersignal empfangen hat, das eine vorbestimmte Betätigungsschwelle übersteigt.

10. Druckluftventil (100) nach Anspruch 5, wobei sich der Ventilkegel (140) und der Kolben (120) erst dann in der Betätigungsrichtung bewegen und die Rasthülse (131) erst dann in den nächsten sequentiellen Ventilabetätigungszustand vorbewegt wird, wenn das pneumatische Steuersignal eine vorbestimmte Betätigungsschwelle übersteigt.

11. Druckluftventil (100) nach Anspruch 5, wobei der Ventilkegel (140) in einer aktuellen Ventilkegelöffnungsdistanz eines aktuellen Ventilzustands gehalten wird.

12. Druckluftventil (100) nach Anspruch 5, wobei eine Kolbenbetätigungskraft erhöht wird, wenn sich der Ventilkegel (140) in der Betätigungsrichtung zu bewegen begonnen hat und den Dichtungskontakt mit der ersten Öffnung (150) unterbricht.

13. Druckluftventilbetätigungsverfahren, wobei das Druckluftventil (100) eine erste Öffnung (150) und eine zweite Öffnung (155) aufweist, wobei das Verfahren **gekennzeichnet ist durch**:
Empfangen eines pneumatischen Steuersignals über die erste Öffnung (150); und
Vorbewegen und Rasten eines Ventilmechanismus (101) in einen/m nächsten sequentiellen Ventilbetätigungszustand aus mehreren vorbestimmten sequentiellen Ventilbetätigungszuständen nach dem Empfang des pneumatischen Steuersignals, wobei die mehreren vorbestimmten sequentiellen Ventilbetätigungszustände mehrere vorbestimmte Strömungsprofile zwischen der ersten Öffnung (150) und der zweiten Öffnung (155) ergeben, wobei der Ventilmechanismus (101) sequentiell unter den mehreren vorbestimmten sequentiellen Ventilsteuerzuständen zykliert und wobei die mehreren vorbestimmten sequentiellen Ventilbetätigungszustände eine vorbestimmte Ventilbetätigungsfolge umfassen.

14. Verfahren nach Anspruch 13, wobei ein Strömungsprofil der mehreren vorbestimmten Strömungsprofile eine vorbestimmte Strömungsrate und/oder eine vorbestimmte Strömungsrichtung zwischen der ersten Öffnung (150) und der zweiten Öffnung (155) aufweist.

15. Verfahren nach Anspruch 13, wobei sich das Druckluftventil (100) erst dann in den nächsten sequentiellen Ventilbetätigungszustand vorbewegt, wenn das pneumatische Steuersignal eine vorbestimmte Betätigungsschwelle übersteigt.

## Revendications

1. Vanne pneumatique (100), la vanne pneumatique (100) comprenant un premier orifice (150) et un second orifice (155), la vanne pneumatique (100) étant **caractérisée par** :
un mécanisme de vanne (101) en communication fluidique avec le premier orifice (150) et le second orifice (155), le mécanisme de vanne (101) étant configuré à des fins de réception d'un signal de commande pneumatique par le biais du premier orifice (150) et à des fins d'avance et d'enclenchement au niveau d'un prochain état d'actionnement de la vanne de séquence parmi une pluralité d'états d'actionnement prédéterminés de la vanne de séquence lors de la réception du signal de commande pneumatique, la pluralité d'états d'actionnement prédéterminés de la vanne de séquence mettant en oeuvre une pluralité de profils d'écoulement prédéterminés entre le premier orifice (150) et le second orifice (155), dans laquelle le mécanisme de vanne (101) effectue des cycles de manière séquentielle parmi la pluralité d'états d'actionnement prédéterminés de la vanne de séquence et dans laquelle la pluralité d'états d'actionnement prédéterminés de la vanne de séquence comporte une séquence d'actionnement prédéterminée de la vanne.

2. Vanne pneumatique (100) selon la revendication 1, dans laquelle la vanne pneumatique (100) est configurée à des fins de commande à distance par le biais du premier orifice (150).

3. Vanne pneumatique (100) selon la revendication 1, un profil d'écoulement de la pluralité de profils d'écoulement prédéterminés comprenant un ou plusieurs parmi un débit d'écoulement prédéterminé et une direction d'écoulement prédéterminée entre le premier orifice (150) et le second orifice (155).

4. Vanne pneumatique (100) selon la revendication 1, dans laquelle le mécanisme de vanne (101) n'avancera pas jusqu'au prochain état d'actionnement de la vanne de séquence sauf si le signal de commande pneumatique dépasse un seuil d'actionnement prédéterminé.

5. Vanne pneumatique (100) selon la revendication 1, le mécanisme de vanne (101) comportant :
un clapet (140) configuré à des fins de déplacement dans une direction d'actionnement par le signal de commande pneumatique ;
un piston (120) en communication fluidique avec le premier orifice (150) et le second orifice (155), le piston (120) étant configuré à des fins de déplacement dans la direction d'actionnement en réponse au mouvement du clapet (140) dans la direction d'actionnement ; et
un cylindre d'enclenchement (131) configuré à des fins d'avance jusqu'au prochain état d'actionnement de la vanne de séquence parmi la pluralité d'états d'actionnement prédéterminés de la vanne de séquence par le mouvement du piston (120) dans la direction d'actionnement ou dans une direction de non-actionnement

6. Vanne pneumatique (100) selon la revendication 5, un profil d'écoulement de la pluralité de profils d'écoulement prédéterminés comprenant une distance d'ouverture prédéterminée du clapet.

7. Vanne pneumatique (100) selon la revendication 5, un profil d'écoulement de la pluralité de profils d'écoulement prédéterminés comprenant une distance d'ouverture prédéterminée du clapet et une pression différentielle prédéterminée entre le premier orifice (150) et le second orifice (155).

8. Vanne pneumatique (100) selon la revendication 5, dans laquelle le cylindre d'enclenchement (131) effectue des cycles parmi la pluralité d'états d'actionnement prédéterminés de la vanne de séquence et dans laquelle la pluralité d'états d'actionnement prédéterminés de la vanne de séquence comporte la séquence d'actionnement prédéterminée de la vanne.

9. Vanne pneumatique (100) selon la revendication 5, dans laquelle le clapet (140) ne se déplacera pas dans la direction d'actionnement tant qu'il n'aura pas reçu un signal de commande pneumatique qui dépasse un seuil d'actionnement prédéterminé.

10. Vanne pneumatique (100) selon la revendication 5, dans laquelle le clapet (140) et le piston (120) ne se déplaceront pas dans la direction d'actionnement et le cylindre d'enclenchement (131) n'avancera pas jusqu'au prochain état d'actionnement de la vanne de séquence sauf si le signal de commande pneumatique dépasse un seuil d'actionnement prédéterminé.

11. Vanne pneumatique (100) selon la revendication 5, dans laquelle le clapet (140) est maintenu à une distance d'ouverture en cours du clapet d'un état de vanne en cours.

12. Vanne pneumatique (100) selon la revendication 5, dans laquelle une force d'actionnement de piston est augmentée une fois que le clapet (140) a commencé à se déplacer dans la direction d'actionnement et casse le contact d'étanchéité avec le premier orifice (150).

13. Procédé d'actionnement de la vanne pneumatique, la vanne pneumatique (100) comprenant un premier orifice (150) et un second orifice (155), le procédé étant **caractérisé par** :
l'étape consistant à recevoir un signal de commande pneumatique par le biais du premier orifice (150) ; et
l'étape consistant à faire avancer un mécanisme de vanne (101) jusqu'au niveau, et à enclencher au niveau, d'un prochain état d'actionnement de la vanne de séquence parmi une pluralité d'états d'actionnement prédéterminés de la vanne de séquence lors de la réception du signal de commande pneumatique, la pluralité d'états d'actionnement prédéterminés de la vanne de séquence mettant en oeuvre une pluralité de profils d'écoulement prédéterminés entre le premier orifice (150) et le second orifice (155), dans lequel le mécanisme de vanne (101) effectue des cycles de manière séquentielle parmi la pluralité d'états d'actionnement prédéterminés de la vanne de séquence et dans lequel la pluralité d'états d'actionnement prédéterminés de la vanne de séquence comporte une séquence d'actionnement prédéterminée de la vanne.

14. Procédé selon la revendication 13, un profil d'écoulement de la pluralité de profils d'écoulement prédéterminés comprenant un ou plusieurs parmi un débit d'écoulement prédéterminé et une direction d'écoulement prédéterminée entre le premier orifice (150) et le second orifice (155).

15. Procédé selon la revendication 13, dans lequel le mécanisme de vanne (101) n'avancera pas jusqu'au prochain état d'actionnement de la vanne de séquence sauf si le signal de commande pneumatique dépasse un seuil d'actionnement prédéterminé.
